Europäisches Patentamt

European Patent Office

Office européen des brevets

(11) Publication number: **0 525 592 A2**

# EUROPEAN PATENT APPLICATION

(21) Application number: **92112449.1**

(22) Date of filing: **21.07.92**

(51) Int. Cl.⁵: **G06F 15/80**

(30) Priority: **26.07.91 JP 187254/91**

(43) Date of publication of application:
**03.02.93 Bulletin 93/05**

(84) Designated Contracting States:
**DE GB**

(71) Applicant: **HITACHI, LTD.**
**6, Kanda Surugadai 4-chome**
**Chiyoda-ku, Tokyo 100(JP)**
Applicant: **HITACHI INFORMATION &**
**CONTROL SYSTEMS, INC.**
**2-1, Omika-cho 5-chome**
**Hitachi-shi, Ibaraki 319-12(JP)**

(72) Inventor: **Hebishima, Shingo, Daini Satsuki**
**Haitsu 208**
**7-20, Fujigaoka-1-chome, Midori-ku**
**Yokohama-shi(JP)**
Inventor: **Matsuba, Ikuo**
**30-25-205, Sagamigaoka-6-chome**
**Zama-shi(JP)**

(74) Representative: **Strehl, Schübel-Hopf,**
**Groening**
**Maximilianstrasse 54 Postfach 22 14 55**
**W-8000 München 22(DE)**

(54) **Information processing system using fractal dimension.**

(57) An information processing system includes a data modifying module (102) for modifying input data to the system, a fractal dimension calculating module (103) for determining a fractal dimension of the input data, a main processing decision module (104) and a main processing module (105). By checking the fractal dimension of the data inputted to the main processing module (105), decision is made as to whether or not the main processing is required. If so, the main processing module (105) is activated to perform adjustment of parameters, modification of output or the like on the basis of the fractal dimension. By introducing as an index the fractal dimension of the data inputted to the system, it is possible to condition previously the system so that most appropriate effect can be attained by utilizing the input data.

FIG. 1

EP 0 525 592 A2

## BACKGROUND OF THE INVENTION

### Field of the Invention

The present invention relates generally to an information processing system. More particularly, the present invention is concerned with an information processing system imparted with a capability of making clear characteristics or properties of data to be used for the purpose of control, prediction or the like when they are unknown in precedence to the use.

### Description of the Prior Art

In general, the dimension dealt with in Euclidean geometry is of an integer value. However, in order to analyze natural organizations or geometries (i.e. patterns of nature) such as shapes of coast lines, snow and others, there arises necessity to extend the dimension to a non-integral value range, as pointed out by Mandelbrot in the book entitled "THE FRACTAL GEOMETRY OF NATURE", pp. 1-5, 256-271. The dimension extended to the non-integral value range is termed the Hausdorf dimension or fractal dimension (hereinafter referred to as the fractal dimension). In a geometrical figure having a self-similarity, the fractal dimension D is defined as follows. If a volume of an object in an N-dimensional space is represented by V when measured by filling up the volume with N-dimensional hyper cubes each having a side of "1" (unity) while it is V' when measured more finely by filling up with N-dimensional hyper cubes reduced by a reduction ratio $r$ ($r < 1$), the fractal dimension D is given by the following expression (1).

$$D = \log(V'/V) / \log(1/r) \qquad (1)$$

At present, the fractal theory attracts attention as a tool or method for analyzing shapes in many and diverse fields of the natural science or as a drawing method of natural organization in the field of computer graphics. However, in the industrial field, there can be found neither instances nor approaches in which the fractal dimension is positively made use of for the control, prediction or the like purpose.

## SUMMARY OF THE INVENTION

In a variety of information processing systems employed for plant control, prediction of economical indexes or the like applications, there necessarily exist data to be inputted to the system, which then performs various processings on the basis of the input data to thereby output a result as aimed. In this conjunction, it is noted that in some applications, the properties of the input data are often uncertain, giving rise to doubtfulness as to whether the result as outputted is the intended one.

Accordingly, it is an object of the present invention to provide a method of conditioning in advance the nature or properties of data to be inputted to a system by using the fractal dimension as an index so that the output intrisically intended for the system can be obtained. It is also contemplated with the present invention to provide an information processing system for carrying out the method mentioned above.

In view of the above and other objects which will become apparent as description proceeds, there is provided according to an aspect of the invention an information processing system, which comprises a facility for determining a fractal dimension of data inputted to the information processing system, and a facility for executing predetermined data processing on the input data by using the fractal dimension as determined.

In a preferred mode for carrying out the invention, there is provided a prediction system which comprises a facility for performing prediction processing by using a predetermined prediction logic on the basis of time-series input data supplied to the prediction system, a facility for determining a fractal dimension of the time-series input data, a facility for determining a confidence of the result of prediction processing on the basis of the fractal dimension as determined, and a facility for outputting the prediction confidence together with the result of the prediction processing.

In another preferred mode for carrying out the invention, there is provided a prediction system which comprises on input facility for inputting time-series data, a facility for performing a predetermined conversion on the time-series input data, a facility for determining a fractal dimension of the data obtained through the conversion, a facility for selecting the data resulting from the conversion in dependence on a value of the fractal dimension, a facility for performing prediction processing on the basis of the selected data by using a predetermined prediction logic, and a facility for performing a conversion reverse to the abovementioned predetermined conversion on the data resulting from the prediction processing.

In a further preferred mode for carrying out the invention, there is provided an alarm generating system which comprises a facility for determining a fractal dimension of monitoring data inputted to the alarm system, and a facility for generating an alarm signal on the basis of data selected from the monitoring data in dependence on a value of the fractal dimension as determined.

By making use of the fractal dimension as an index indicating a trend or nature of input data, it is possible to condition parameters of a processing module for processing the input data so that appropriate output can be obtained by using the input data. Further, there can be implemented a system which is capable of evaluating in advance the output of the processing module on the basis of the fractal dimension of the input data.

BRIEF DESCRIPTION OF THE DRAWINGS

The above and other objects as well as features of the invention will best be understood from a detailed description of preferred or exemplary embodiments thereof, selected for the purposes of illustration and shown in the accompanying drawings, in which:

Fig. 1 is a functional block diagram showing a general arrangement of an information processing system in which the concept of fractal dimension is adopted;

Fig. 2 is a functional block diagram showing a system configuration of a time-series data prediction system in which the fractal dimension is made use of;

Fig. 3 is a flow chart for illustrating a processing procedure for determining a fractal dimension;

Fig. 4 is a view for explaining the concept of the fractal dimension;

Fig. 5 is a view showing an intermediate result obtained in the course of determining a fractal dimension;

Fig, 6 is a pictorial diagram showing a structure of a neuron unit constituting a part of a neural network;

Fig. 7 is a diagram illustrating a structure of a multi-layer neural network;

Fig. 8 is a functional block diagram for illustrating a learning process of a time-series data predicting neural network;

Fig. 9 is a flow chart for illustrating processing for a learning process of the time-series data predicting neural network;

Fig. 10 is a diagram for illustrating a prediction process executed by a time-series data predicting neural network;

Fig. 11 is a view for graphically illustrating a learning parameter setting process, by way of example;

Fig. 12 is a view for illustrating graphically effects attained through the learning parameter setting process;

Fig. 13 is a view for illustrating graphically a relation between a fractal dimension of data subjected to prediction and a prediction error;

Fig. 14 is a view for illustrating graphically a relation between a fractal dimension of data subjected to prediction and a prediction hit ratio;

Fig. 15 is a view for illustrating graphically an example of the output result of a time-series data predicting system which is applied to prediction of an economical trend;

Fig. 16 is a view for illustrating graphically the output result of a time-series data predicting system applied to prediction of weather data;

Fig. 17 is a functional block diagram showing a structure of a time-series data predicting system according to a second embodiment of the invention;

Fig. 18 is a view showing, by way of example, a result of prediction as performed;

Fig. 19 is a functional block diagram showing schematically a structure of an alarm system in which the concept of the fractal dimension is adopted;

Fig. 20 is a view showing graphically an example of input data;

Fig. 21 is a view showing graphically another example of the input data; and

Fig. 22 is a functional block diagram showing schematically a structure of a construction break-down predicting system to which the concept of the fractal dimension is applied.

DESCRIPTION OF THE PREFERRED EMBODIMENTS

In the following, the present invention will be described in detail in conjunction with preferred or exemplary embodiments thereof on the assumption that the invention is applied to a prediction system for predicting values of time-series data which vary as a function of time lapse such as currency (money) exchange rate, stock price, atmospheric temperature, boiler temperature and the like. In order that the result of the prediction performed by such prediction system makes a hit, such prerequisites must be satisfied that at least some dynamics can be observed in the variations or changes of the time-series data and that the dynamics continue to be valid in the near future. However, there exist some types of data which can not satisfy the above-mentioned prerequisite. By way of example, it is absolutely impossible with any system to predict a sequence of random variables which exhibits no dynamics. On the other hand, economical data such as stock price can be considered as having the dynamics which undergo variation in the course of time lapse. If dynamics of data changes frequently during a short span of time, it is naturally expected that prediction of value of such data will fall of the mark because the dynamic predicted immediately after occurrence of a change in the value of the data can not be regarded as an extension of the dynamic observed at the current time point. In other words, some predicted value may hit the mark while some predicted value may mishit, the hit ratio being determined in dependence of the nature or trend of the data to be subjected to the prediction.

With the prediction techniques known heretofore, it is impossible to indicate quantitatively what kind of trend or property of the data subjected to the prediction provides obstacle to the hit. Under the circumstances, the user of a prediction system will often waver in his or her decision to what extent the result of the prediction obtained by using the prediction system is reliable. In the light of the state of the art, it is contemplated with the present invention to provide such a prediction system which is capable of deriving beforehand the reliability or confidence of a prediction to be performed on given data by making use of an index referred to as the fractal dimension.

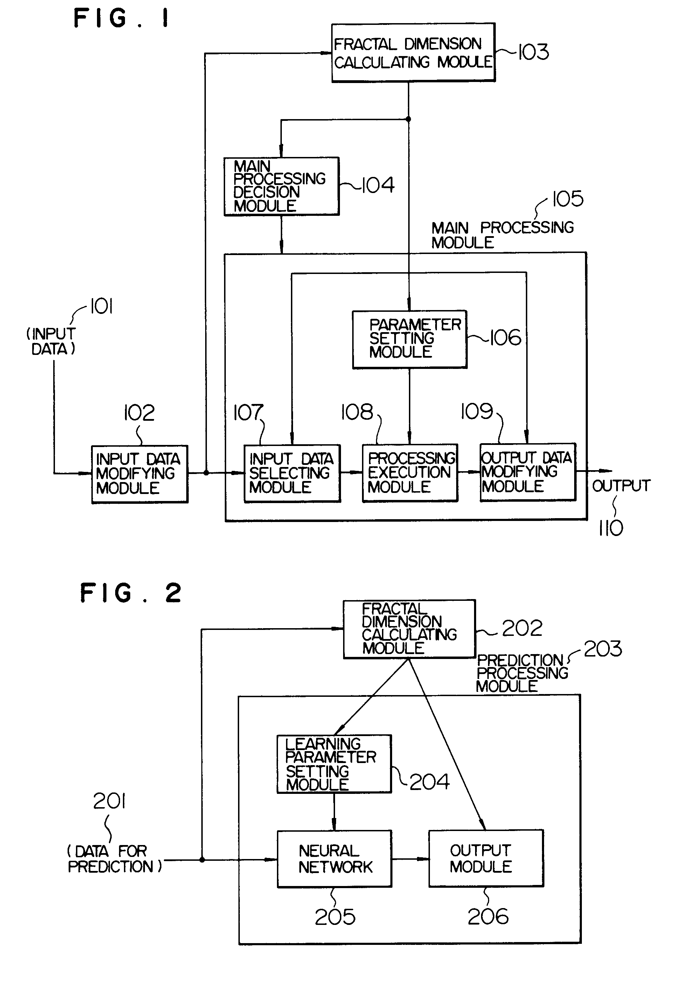

Fig. 1 is a functional block diagram showing a general arrangement of an information processing system in which the concept of the fractal dimension is adopted. As can be seen in the figure, the information processing system includes as major constituent parts an input data modifying part (or module) 102, a fractal dimension calculating part (or module) 103, a main processing decision part (or module) 104 and a main processing part (or module) 105, wherein the system generates output data 110 in response to input data 101. The input data modifying part 102 generates requisite data from the input data 101 or convert the latter into the former in dependence on a task to be executed by the system. The fractal dimension calculating part 103 determines a fractal dimension of the modified data. On the basis of the fractal dimension thus determined, the main processing decision part 104 makes decision as to whether or not the main processing part 105 is to be activated and activates the latter as the occasion requires it. The main processing part 105 includes an input data selecting part (or module) 107, a processing execution part (or module) 108, a parameter setting part (or module) 106 and an output data modifying part (or module) 109 and performs selection of the requisite data from the input data, execution of processing, setting of parameters and modification of the output data.

The input data modifying part 102 performs a system-oriented conversion of the input data 101 such as Fourier transformation, analogue-to-digital (A/D) conversion, logarithm transformation or the like and serves to generate the requisite data such as difference values or the like from the input data 101. In the fractal dimension calculating part 103, a fractal dimension of the data obtained as the result of the transformation or conversion or generation mentioned above is determined as the index to be utilized in subsequent processing. At first, the main processing decision part 104 makes decision as to whether the main processing part 105 is to be activated or not on the basis of the fractal dimension determined by the fractal dimension calculating part 103. When the answer of this decision is affirmative (YES), the main processing part 105 is activated. By way of example, let's suppose a process control system for monitoring the temperature of a boiler. In this system, when the fractal dimension of the sampled temperature data varies abruptly, this indicates that some abnormality takes place in the system being monitored. Accordingly, abnormality analysis processing or fault removal processing is activated as the main processing part 105, whereupon requisite input data is determined by the input data selecting part 107 on the basis of the fractal dimension outputted from the fractal dimension calculating part 103 with the requisite parameters being set by the parameter setting part 106, which is then followed by execution of predetermined processing by the processing execution part or module 108. The data outputted from the processing execution part 108 is converted into a predetermined output form by the output data modifying part 109 to be outputted as indicated at 110. At this juncture, a part or parts of the system shown in Fig. 1 may be spared in dependence on the types of applications in which the system is actually employed.

Fig. 2 is a functional block diagram showing an exemplary arrangement of a time-series data prediction system in which the concept of the fractal dimension is adopted. As shown in the figure, the time-series data prediction system comprises a fractal dimension calculating part (or module) 202 and a prediction processing part (or module) 203 which correspond to the fractal dimension calculating part (module) 103 and the main processing part (module) 105 shown in Fig. 1, respectively. The prediction processing part (module) 202 includes a neural network 205 for performing prediction, a learning parameter setting part (or module) 204 for setting parameters useful for the learning of the neural network and an output processing part (or module) 206 for determining the reliability or confidence of the result of prediction on the basis of the fractal dimension for thereby outputting information of the confidence together with the result of prediction.

Now, description will turn to the operation of the time-series data predicting system shown in Fig. 2.

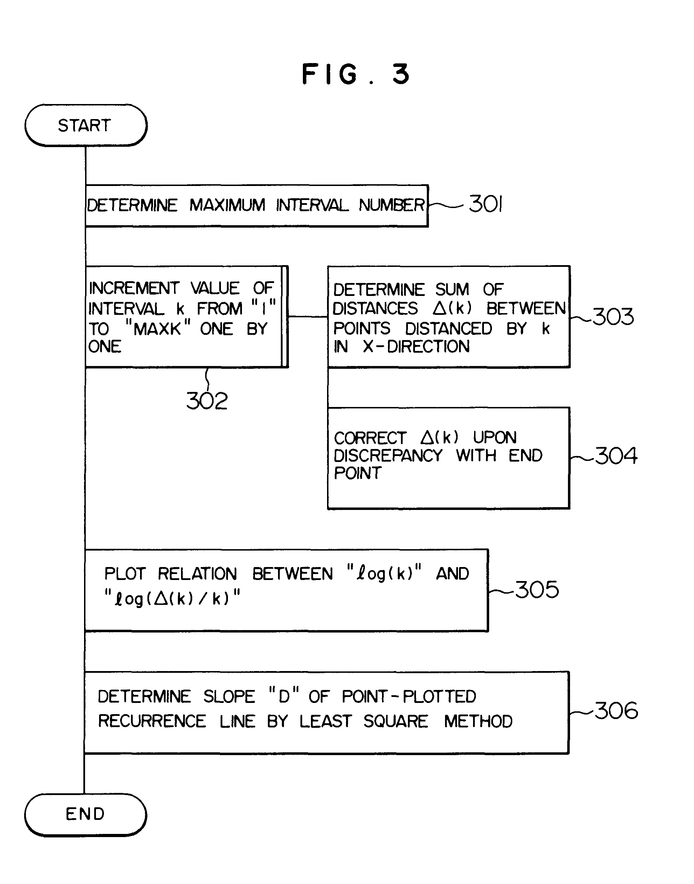

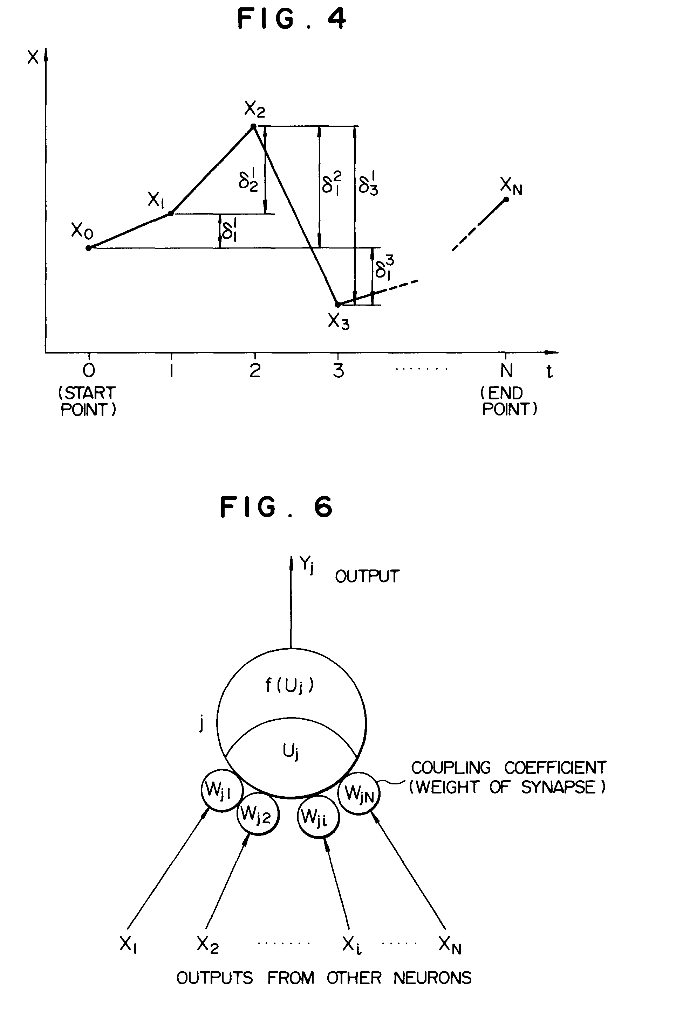

At first, values of the fractal dimension of given time-series data are determined from a time point in the past to the present by the fractal dimension calculating part 202. The values of the fractal dimension are determined through a processing flow illustrated in Fig. 3 in accordance with Higuchi method described in "Journal of the Institute of Electronics, Information and Communication Engineers of Japan", Vol. J73-D-II, No. 4 (1991. 4), p. 497. Now, let's suppose $(N + 1)$ data $X_0$, $X_1$, $X_2$, ..., $X_N$, as illustrated in Fig. 4, and consider how to determine distances along polygonal lines $X_0$-$X_1$, $X_1$-$X_2$, ..., $X_{N-1}$-$X_N$ in the longitudinal direction (in the direction of the X-axis). In that case, the distance determined along every broken lines $X_0$-$X_1$, $X_1$-$X_2$, and so forth (i.e. measured sequentially at a unity interval "1") differs from the distance determined along every other polygonal line (measured at an interval of "2") as well as the distance determined along every two other polygonal line (measured at an interval of "3").

In the case of the example illustrated in Fig. 4, the distance $\Delta$ (1) measured at the interval of "1" is given by the following expression (2):

$$\Delta\,(1) \;=\; \sum_i \delta^1{}_i \qquad\qquad \dots\dots(2)$$

On the other hand, the distance $\Delta$ (2) measured at the interval of "2" is given by the following expression (3).

$$\Delta\,(2) \;=\; \sum_i \delta^2{}_i \qquad\qquad \dots\dots(3)$$

In more general terms, let's represent by $\Delta$ (k) the distance determined at the measuring interval of "k". In that case, when relation between "k" and "$\Delta$ (k)" satisfies the condition given by the following expression (4),

$$\Delta\,(k) \;=\; \sum_i \delta^k{}_i \;\propto\; k^{-D} \qquad\qquad \dots\dots(4)$$

then it is said that the time-series data under consideration is fractal with the fractal dimension of the data having a value of "D".

More specifically, description will be made by reference to the flow chart shown in Fig. 3. The interval at which the distance from $X_0$ to $X_N$ is to be measured is represented by "k", a maximum value of which is then given by $[(N + 1)/2]$ and is represented by "MAXK" (step 301), wherein a symbol [ ] represents an integer rounding symbol. Next, the value of "k" is incremented from "1" to "MAXK" one by one (step 302) and a total difference $\Delta$ (k) along the X-axis is determined in accordance with the following expression (5) in a step 303.

$$\Delta\,(k) \;=\; \sum_i \left| X(k \times i) - X(k \times (i - 1)) \right| \quad \dots\dots(5)$$

In that case, there may occur such situation in which the terminal or end point does not coincide with "$X_N$"in dependence on the value of "k". By way of example, the end point in the measurement with "k" equal to "2" falls in with a point $X_{N-1}$ just preceding to "$X_N$". Accordingly, this error is corrected in accordance with the following expression (6) in a step 304.

$\Delta$ (k) = $\Delta$ (k) HP N/([(N + 1)/k] HP k)     (6)

5

EP 0 525 592 A2

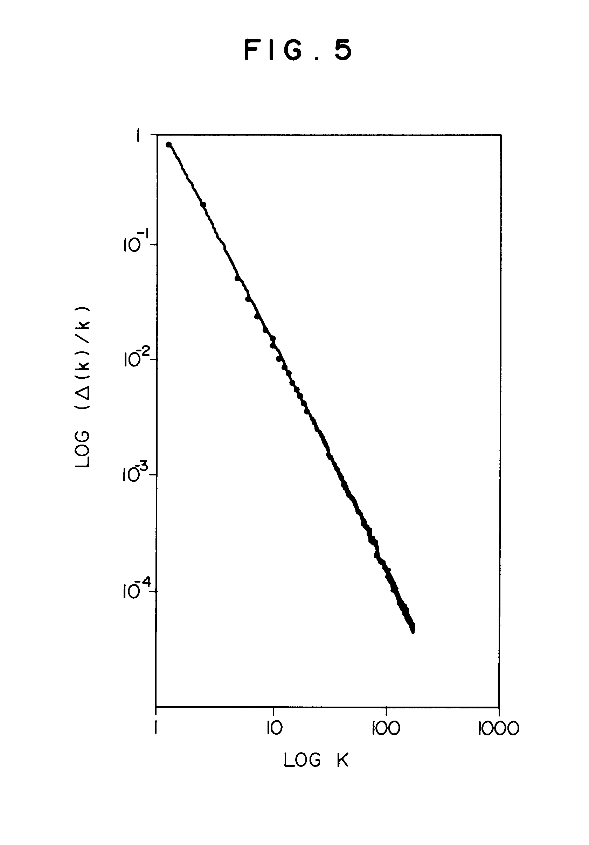

By using the value of Δ (k) thus obtained, a relation between a common logarithm "log (k)" of the interval k and a common logarithm "log (Δ(k)/k)" is plotted (step 305). If the data is fractal, points as plotted will represent a straight line as illustrated in Fig. 5. A slope D of this straight line is then determined by a least square method in a step 306 (Fig. 3). The slope D thus determined represents the fractal dimension.

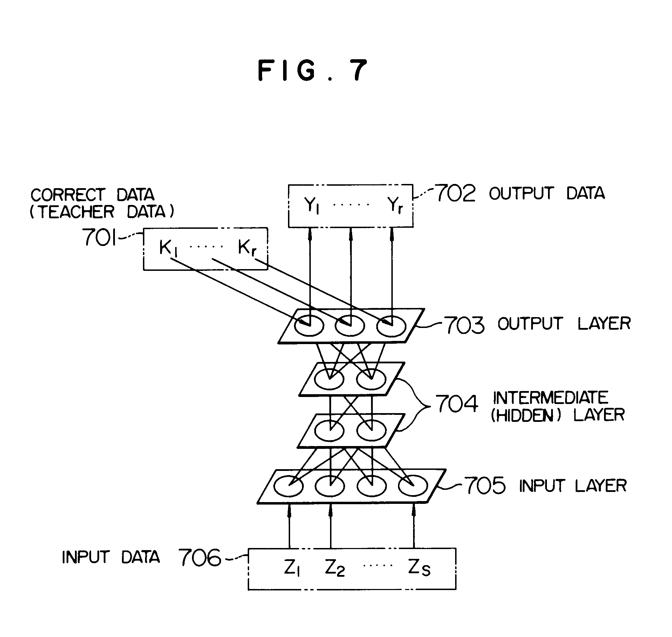

The further prediction is performed by the neural network 205 in the system shown in Fig. 2. The neural network is constituted by a plurality of units referred to as the neuron and each having a multiplicity of inputs and one output, as can be seen in Fig. 6. Each of the neurons has a characteristic given by the following expression (7).

$$Y_j = f (U_j) \qquad (7)$$

where f represents an output function and $U_j$ represents a weighted sum of outputs from the other neurons i. The weighted sum $U_j$ can be expressed as follows:

$$U_j = \Sigma W_{ji}X_i \qquad (8)$$

As the output function f, there is used generally sigmoid function given by

$$f(x) = 1/(1 + e \times p (-x)) \qquad (9)$$

In general, the neurons are disposed in such a manner as shown in Fig. 7 to thereby constitute a multi-layer neural network, in which an input layer 705 has no neuron input and can be realized in most cases by a linear element capable of performing the operation given by the undermentioned expression (10).

$$Y_j = V \qquad (10)$$

where V represents a value resulting from normalization of the input data to a range of "0" to "1".

An advantage obtained by using the neural network for the prediction is seen in that the neural network itself has a capability of knowing the dynamics of the data by learning even in case the dynamics is unclear. In this connection, with the term "learning" used herein, it means such a capability of the neural network that inter-neuron coupling coefficients (i.e., weights of synapses) $W_{ji}$ are so adjusted that output data $Y_1, Y_2, ..., Y_r$ produced in response to application of input data $Z_1, Z_2, ..., Z_s$ to the input layer become equal to correct data (also referred to as teacher data) $K_1, K_2, ..., K_r$. In general, the learning is realized by a back-propagation method according to which the inter-neuron coupling coefficients (weights of synapses) are adjusted in dependence on the differences between the correct (teacher) data $K_i$ and the neuron output values $Y_i$ so that a square error between the neuron output data $Y_i$ and the correct data $K_i$, i.e., E = ($K_i$ - $Y_i)^2/2$ becomes minimum.

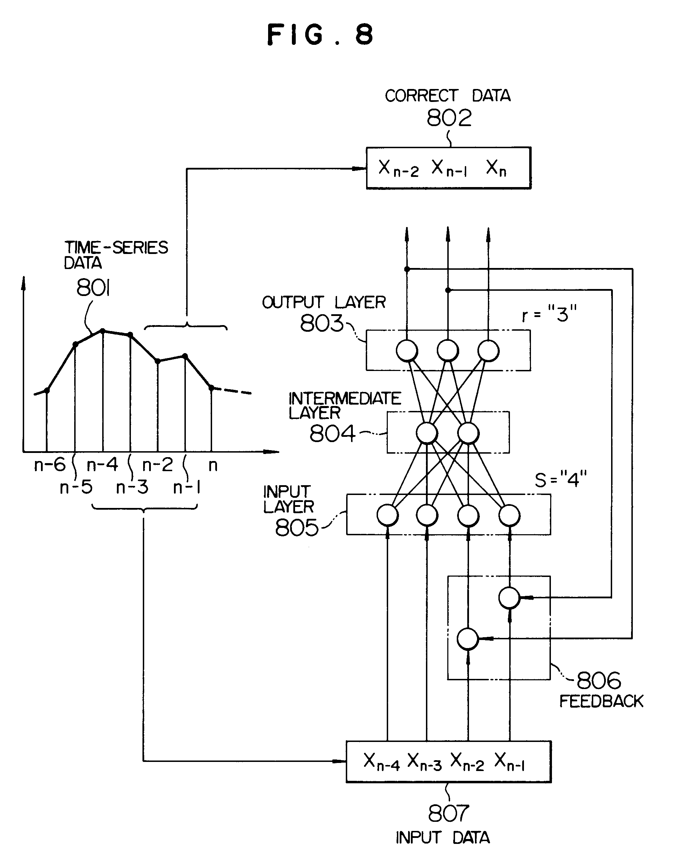

The neural network used for the prediction in the system according to the instant embodiment of the invention differs slightly from the structure shown in Fig. 7 and has a structure in which the outputs of the multi-layer network are fed back to the input layer, as known in Fig. 8, which structure is very profitable when applied to the prediction of the time-series data among others. At this juncture, it should be mentioned that values of the time-series data 801 supplied to the neural network are normalized so as to fall within a range of "0" to "1".

Operations of the neural network can be classified into a learning process and a prediction process. The learning process is effectuated by using the back-propagation method such that when time-series data $X_{n-s}, X_{n-s+1}, ..., X_{n-1}$ are inputted as the input data 807 by paying attention to one data $X_n$ of the time-series data 801, the corresponding output data assume the same values as the correct (teacher) data 802 of $X_{n-r+1}, X_{n-r+2}, ..., X_n$, as shown in Fig. 8, where s represents the number of the neurons in the input layer and r represents the number of the neuron in the output layer. In this conjunction, it should be noted that because of the presence of a feedback 806 from the output layer 803 to the input layer 805, those neurons in the input layer 805 to which the feedback is validated are supplied as the inputs thereto an absolute value of difference between the input data and the output data while those neurons in the input layer to which no feedback is applied from the output layer are supplied with the values of X as they are. As a consequence, the input value to the neurons in the input layer to which the feedback is applied approaches zero as the learning process makes progress. In this way, by adopting the feedback structure described above, it is possible to take into consideration the influence of the past event to the current event in implementation of the network. The learning process is completed by adjusting the coupling coefficients (weights of synapses)

6

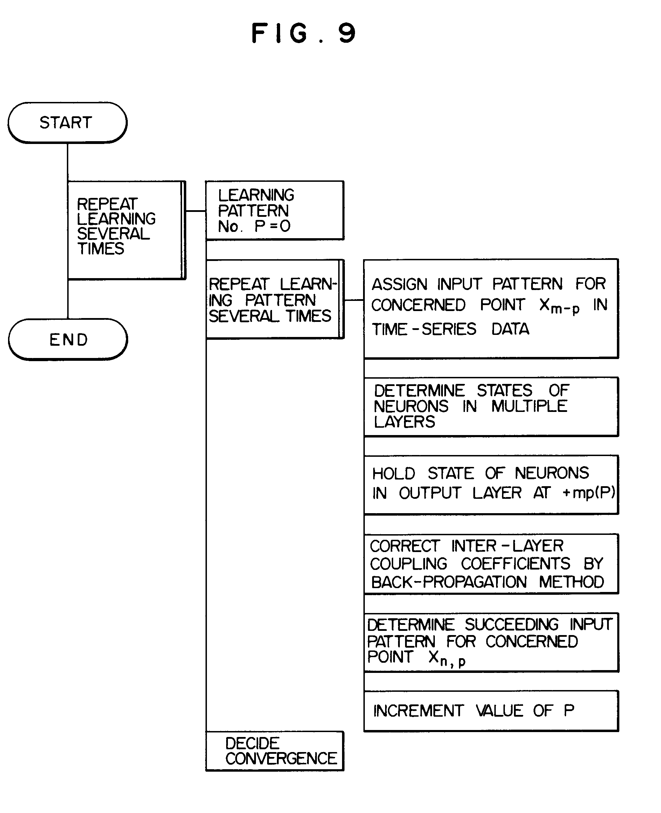

so that the similar input-versus-output relation can be obtained even when the data point $X_n$ of concern is progressively shifted backward to $X_{n-1}$, $X_{n-2}$ and so forth. The learning process described above is illustrated in a flow chart of Fig. 9.

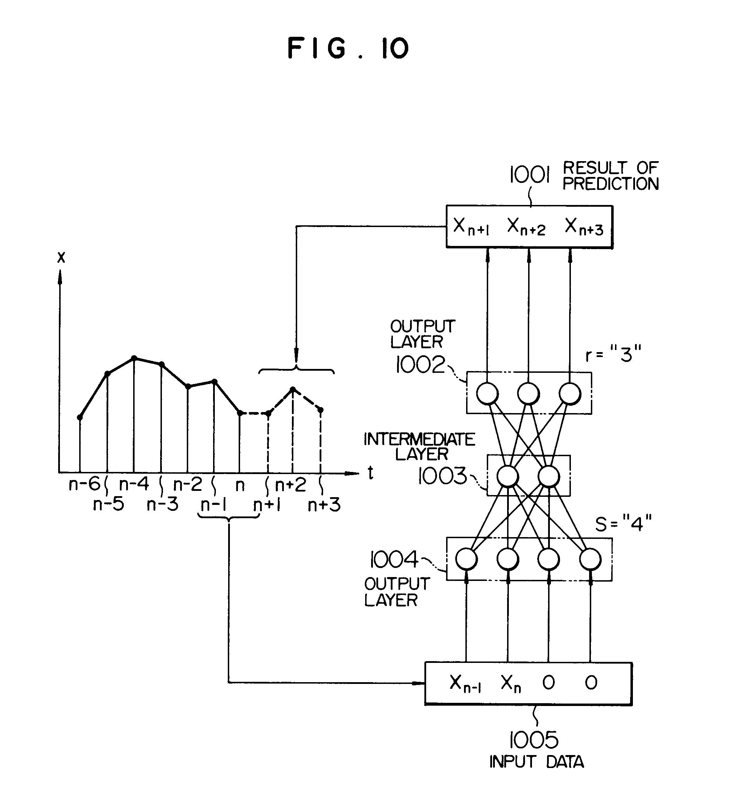

In the prediction process, it is desirable to predict not only the data value at a point succeeding immediately to the current point but also the data value at a future point distanced from the current by several points. To this end, it is necessary to invalidate the feedback upon performing the prediction process. Fortunately, the input to the neurons in the input layer to which the feedback is applied becomes approximately zero when the learning process has advanced sufficiently. By taking advantage of this fact, zero is inputted to those neurons having the feedback applied as described previously by reference to Fig. 8 upon starting the prediction process while $X_{n-(s-r)+1}$, $X_{n-(s-r)+2}$, ..., $X_n$ are inputted to the other neurons in the input layer (as indicated at 1005 in Fig. 10). The output data obtained in this manner represents the result of prediction, i.e., $X_{n+1}$, $X_{n+2}$, ..., $X_{n+r}$ (1001 in Fig. 10). Thus, r predicted values are made to be available, starting from a point $X_{n+1}$ which succeeds to the current point $\bar{X}_n$.

The use of the neural network necessitates determination of parameters such as the number of the neurons in each layer, the number of learning patterns, the number of times the learning is to be effectuated and others. Among others, the number of the neurons in the output layer plays an essential role in determining how far the point for which the prediction is to be made is distanced from the current point. It is however doubtful whether the prediction made for a time point in the far future by providing a greater number of neurons in the output layer is of any practical significance. Accordingly, the number of the neurons to be incorporated in the output layer should preferably be determined by estimating the farthest time point in the future which can assure high accuracy or reliability (confidence) for the prediction on the basis of the intermediate result obtained in the course of determining the fractal dimension. This operation can be performed by the learning parameter determining part 204.

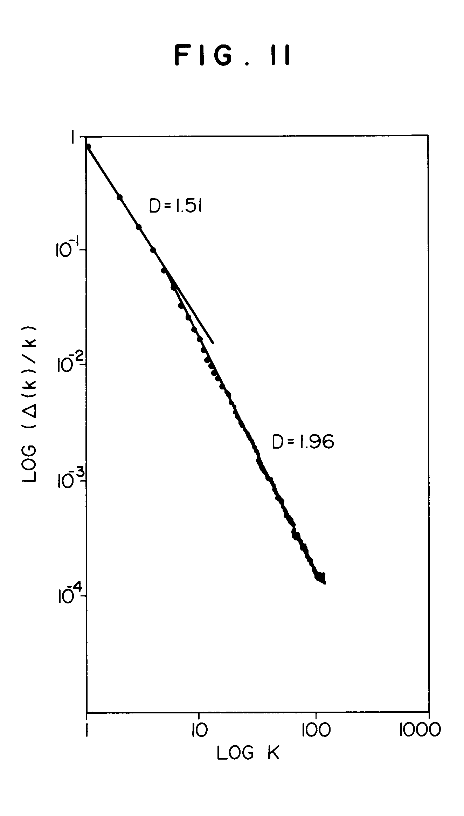

Fig. 11 is a view which illustrates graphically a relation between "log (k)" and "log ($\Delta$ (k)/k) for determining the fractal dimension of change in the price of stock of a certain brand. In the case of the instant example, points as plotted do not represent a straight line but is bent at an intermediate point. More specifically, the slope of the straight line segment (i.e., the fractal dimension) determined within a range where the value of k is from "1" to "5" is "1.51", while the fractal dimension determined within the range of values of k beyond "6" is "1.96". This means that data observed locally exhibit a characteristic different from that observed globally. In other words, the fractal dimension can be regarded as an index indicating randomness of data. More specifically, the data illustrated in Fig. 11 changes very randomly on the whole although the randomness of the data is negligible on a local survey. Accordingly, in the case of the instant example, the reliability or confidence of the prediction can be ensured within a range in which the fractal dimension is low, e.g., up to a point in the future which is distanced about five points from the current point. However, beyond that future point, the result of prediction lacks the reliability. Thus, it can be understood that about five neurons are sufficient for the output layer.

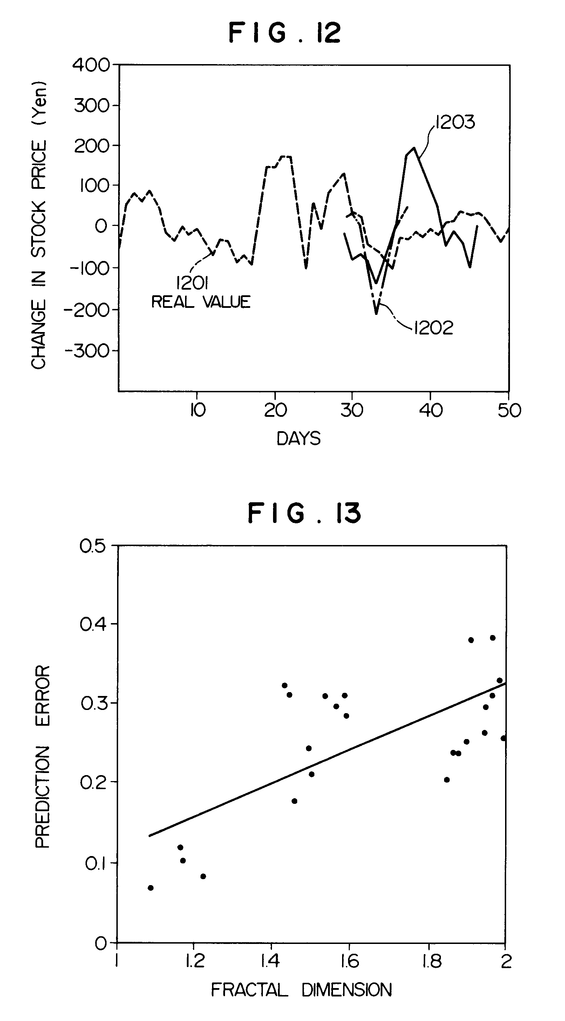

Fig. 12 shows, by way of example, a result of prediction performed eight points (days) ahead on the above-mentioned data (dotted broken line plot 1202) together with a result of prediction performed eighteen points (days) ahead (solid line plot 1203). Parenthetically, a broken line plot 1201 shows real changes in the stock price data. As can be seen in Fig. 12, the result of prediction up to the eighteenth future point (day) represented by the plot 1203 well coincides with the real changes in that the stock price of concern is once lowered and rises again in the earlier half while showing significant discrepancy in the latter half.

The output processing part 206 in the system shown in Fig. 2 serves for displaying the result of prediction performed by the neural network 205 as well as for calculating the reliability or confidence of the result of prediction on the basis of the fractal dimension calculated by the fractal dimension calculating part 203. As previously pointed out, the fractal dimension can be considered as an index indicating the randomness. By way of example, the fractal dimension of time-series data which increases in proportion to the time lapse such as given by the undermentioned expression (11) is "1", while the fractal dimension of a random variable sequence approaches "2" very closely.

$$X = a HP t + b \qquad (11)$$

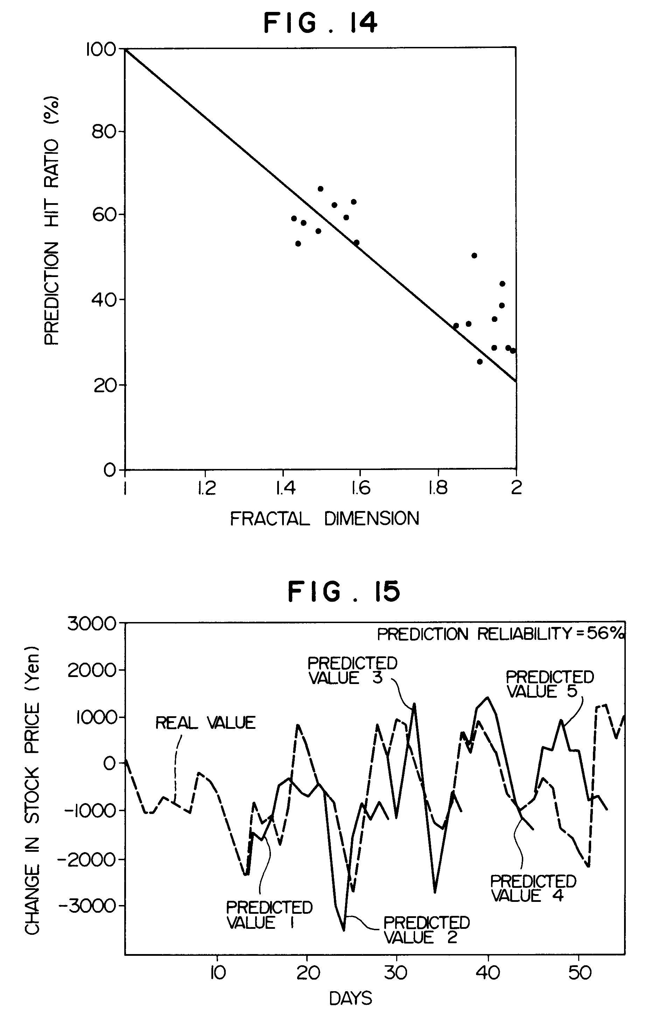

Fig. 13 shows a relation between a fractal dimension of data to be predicted and a prediction error. It will be seen from this figure that the prediction error increases as the fractal dimension approaches "2" more closely or as the randomness of the data becomes more significant. Fig. 14 shows a relation between a fractal dimension of data subjected to the prediction and the prediction hit ratio. For determining the prediction hit ratio, changes in the data are classified into five patterns monotonous increase , "rise followed by fall", "no change", "fall followed by rise" and "monotonous fall". When the pattern resulting from the prediction coincides with the pattern of the real data, it is said that the prediction makes hit. If the fractal dimension of data is "1" (i.e., when it can be expressed by a linear function such as the expression (11)), the prediction can be performed perfectly. In that case, the prediction hit ratio is 100 %. However, the prediction hit ratio lowers as the fractal dimension increases. In the case of the random variable sequence (whose fractal dimension is "2"), the prediction hit ratio is 20 %, a probability value indicating that the prediction makes hit on one of the five patterns. An expected prediction hit ratio of the neural network can be derived on the basis of the fractal dimension of the data subjected to the prediction by consulting the plot shown in Fig. 14 and displayed simultaneously with the result of prediction.

Description will now turn to an example of prediction actually performed on time-series data by using the prediction system according to the invention. Fig. 15 shows a result of prediction performed by using the neural network for predicting changes in the price of stock of a certain brand. In the figure, a broken line plot shows real changes in the stock price while a solid line plot shows the result of prediction. The prediction was performed five times for different days, respectively. Since the fractal dimension determined on the basis of the changes in the stock price in the past is 1.57, it is expected from Fig. 14 that the prediction hit ratio will be about 60 %. The result of the prediction performed actually also shows that three of the five predictions made hits, meaning that the real hit ratio is 60 %.

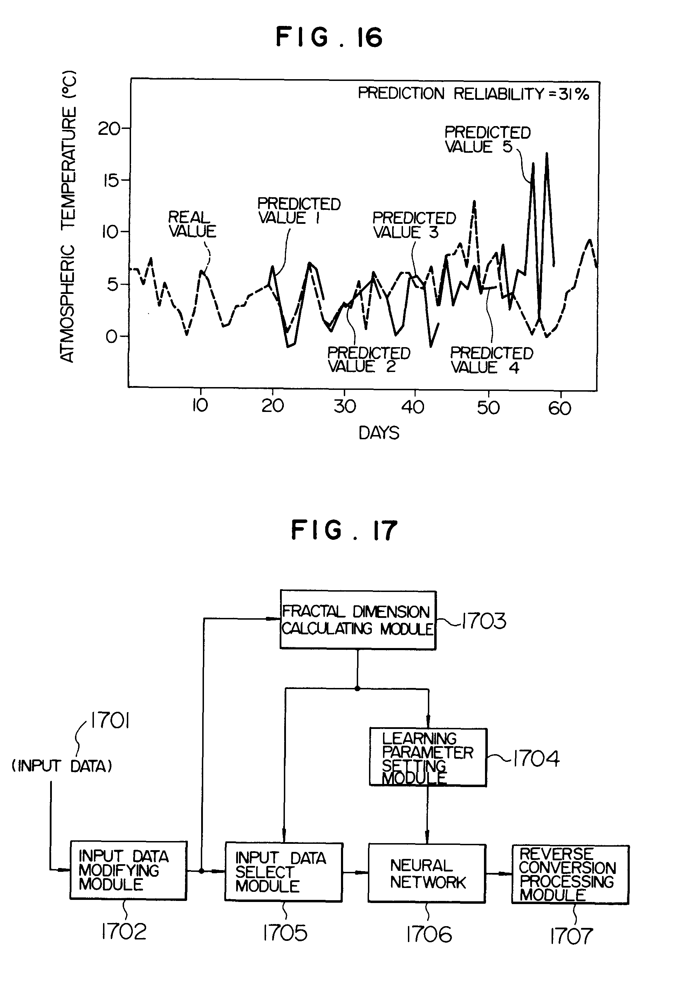

Further, Fig. 16 shows the result of the prediction performed for the changes in the highest daily atmospheric temperature in the winter of 1981 in Sendai district of Japan. A broken line plot indicates the actual temperatures with solid line plot indicating the predicted temperature degrees. The prediction was also performed five times for different days, respectively. The fractal dimension of the temperature data is 1.86. Accordingly, the expected hit ratio of the prediction is about 30 %. The result of the prediction actually performed shows that two of the five predictions made hit, meaning that the real hit ratio is 40 %.

As will be appreciated from the above description, with the prediction system according to the instant embodiment of the invention, it is possible to know to what extent a predicted value resulting from a prediction of future behavior on the basis of past behavior of given time-series data is reliable, which in turn means that the processing to be subsequently performed can be determined more correctly and appropriately on the basis of the result of the prediction.

As pointed out previously, the prediction is difficult to perform with a high hit ratio for the data of which fractal dimension is high. There exist, however, some practical applications in which the prediction should be performed notwithstanding of the difficulty. In this conjunction, it is expected that the accuracy or reliability of the prediction can be improved if the fractal dimension of data which is difficult to predict can be lowered by modifying the data in some way. In the following, several embodiments of the invention will be described which are directed to improvement of the prediction accuracy or reliability by modifying the data conversion (translation) method so that the fractal dimension can be lowered.

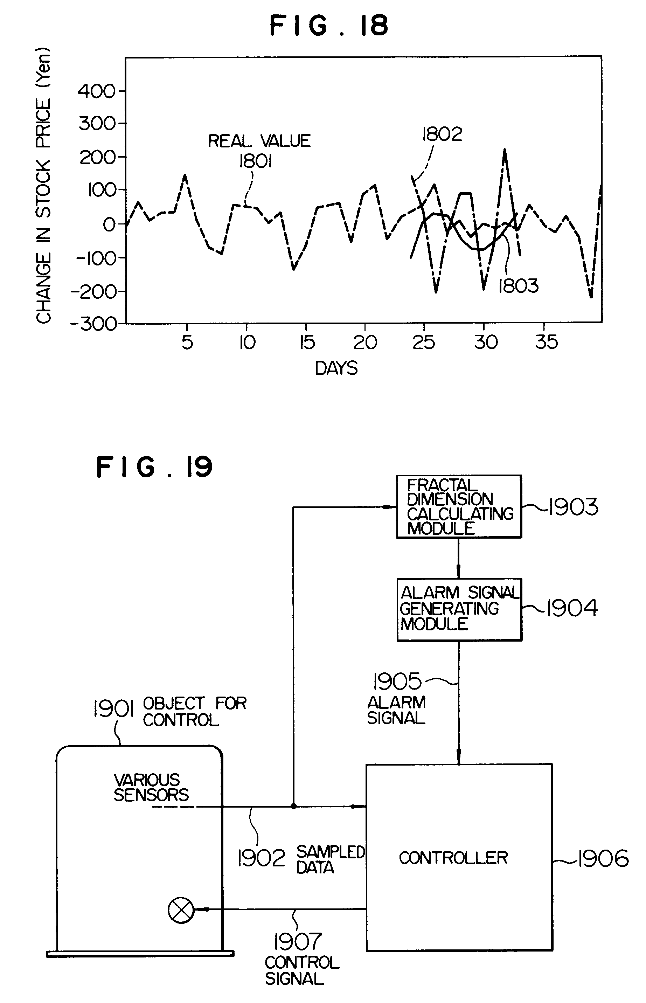

Fig. 17 is a functional block diagram showing a structure of the prediction system according to a second embodiment of the invention. Referring to the figure, input data to be subjected to the prediction is supplied to an input data modifying part (or module) 1702 which serves for generation of data such as a difference, a moving average, a distance (or deviation) ratio from the moving average or the like. The fractal dimension of the data outputted from the input data modifying part (or module) 1702 is arithmetically determined by a fractal dimension calculating part (or module) 1703, which is then followed by selection of those data which can be expected to ensure a high prediction accuracy by an input data select part (or module) 1705. On the basis of the selected data, a neural network 1706 performs prediction. Parameters required for the learning are set by a learning parameter setting part (or module) 1704. Operations of the neural network 1706 and the learning parameter setting part 1704 are same as those of the corresponding parts described hereinbefore in conjunction with the first embodiment. The result of the prediction performed by the network then undergoes conversion reverse to that performed by the input data modifying part, whereby a predicted value of the data as aimed can be determined. The reverse conversion mentioned above is carried out by a reverse conversion processing part (or module) 1707.

Fig. 18 shows graphically a result of the prediction performed for predicting change in the price of stock of a certain brand by the prediction system according to the second embodiment. In the figure, a broken line plot 1801 represents the real changes, while a dotted broken line plot 1802 and a solid line plot 1803 represent predicted changes, respectively. The change data of the stock price has a fractal dimension of 1.96. Accordingly, it is expected that the hit ratio of the prediction will be about 20 %, representing an accidental hit ratio. In fact, the result of the prediction performed by using the data intact (represented by the plot 1802 in Fig. 18) are utterly out of the mark when compared with the real change of the stock price. However, the prediction accuracy can be enhanced by deriving from the stock price change data the moving average data and data of the distance ratio from the moving average, performing the predictions separately on the basis of these data, respectively, and by synthesizing the results of the two predictions.

More specifically, the fractal dimension of the moving average data determined for ten days is 1.20 while that of the distance ratio data is 1.55, both being lower than the fractal dimension of the stock price change data. The plot 1803 in Fig. 18 shows the result of the stock price change prediction which is determined on the data obtained by synthesizing or combining the moving average data and the distance ratio data mentioned above. As can be seen from the plot 1803, the prediction based on the separate data (i.e. moving average data and the distance ratio data) coincides satisfactorily with the trend "rise and then full" in contrast to the prediction based directly on the stock price change data itself. In this manner, it is possible to modify previously the data subjected to the prediction processing by referencing the fractal dimension as the index so that the aimed result can be attained.

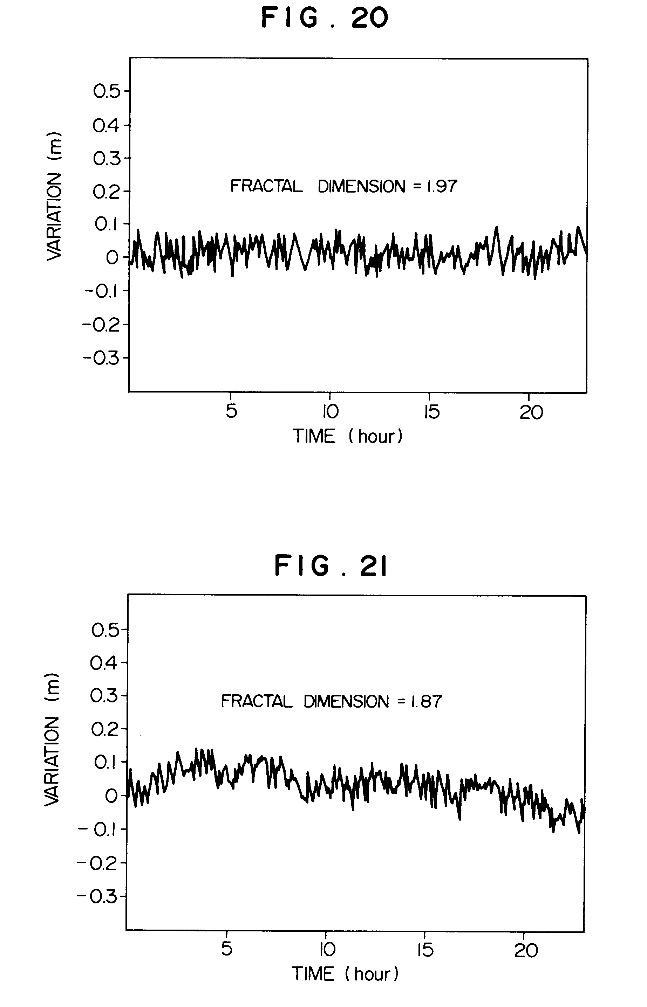

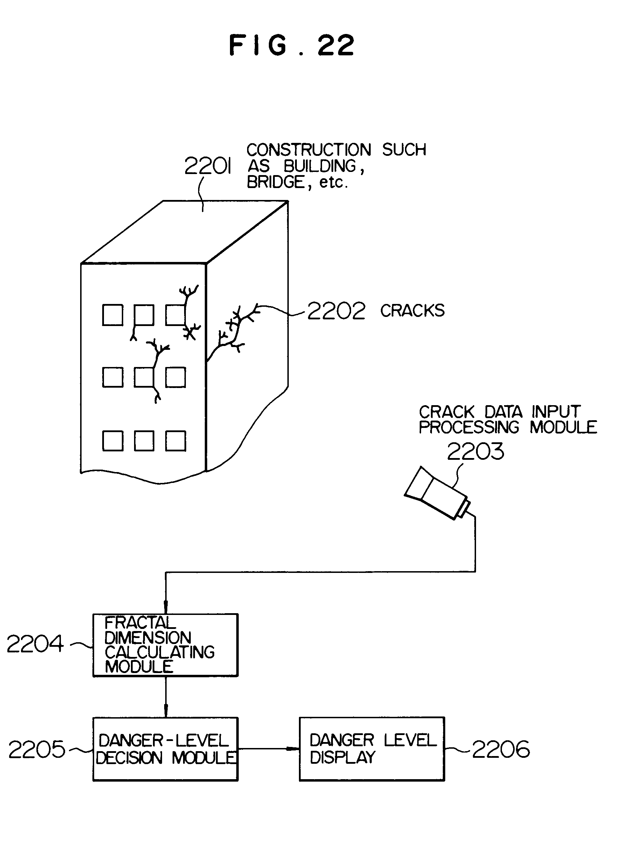

Next, a third embodiment of the invention will be described which is applied to an alarm system of such a configuration as shown in Fig. 19. In a typical control system, it is a common practice to sample data from an object 1901 to be controlled and input the sampled data 1902 to a controller 1906 which is designed to process the input data to thereby generate a control signal 1907 for controlling the object 1901. According to the teaching of the invention incarnated in the third embodiment, the data inputted to the controller 1906 is also supplied to a fractal dimension calculating part 1903 to determine the fractal dimension of the input data for the purpose of detecting abnormality taking place in the system and generating an alarm. By way of example, in the case where the sampled data is such as illustrated in Fig. 20 in the steady state of the system, the fractal dimension of the data is 1.97. However, when the sampled data changes in a manner shown in Fig. 21 due to some cause such as increase in clearance of a value or the like, the fractal dimension decreases to 1.87. On the basis of such change in the fractal dimension, an alarm signal generating part 1904 detects a symptom of abnormality occurrence in the system and/or makes decision as to the level of abnormality and generate an alarm signal 1905, as occasion requires it. In this way, it is possible to detect abnormality of a system by checking the fractal dimension.

Finally, description will be made of a fourth embodiment of the invention which is applied to a measuring system for detecting a level of break-down danger of aged constructions. In general, time-worn constructions such as building, bridges and the like suffer from generation of numerous crevices and cracks and will eventually encounter the danger of collapse. Under the circumstances, it is very useful if the level of danger at which a construction of concern stands can be detected or determined. The fourth embodiment of the invention is directed to a system for determining the level of danger of a construction by checking the fractal dimension of data sampled from cracks produced in a construction. Fig. 22 shows a structure of this system. Referring to the figure, data of cracks 2202 produced in a construction 2201 is inputted to the system through a crack data input processing part (or module) 2203. This data input can be realized by taking a picture of the construction and reading the cracks by means of an image scanner, by way of example. Of course, the crack data to be inputted is not necessarily of the whole construction but may be sample data obtained by sampling the crack data from a part of the construction. Subsequently, a fractal dimension of the crack data is then determined by a fractal dimension calculating part (or module) 2204. On the basis of the fractal dimension, a danger-level decision part (or module) 2205 arithmetically determines the level of danger of the construction concerned to thereby display the danger level on a display unit 2206.

As will now be appreciated from the foregoing description, according to the teachings of the present invention incarnated in the illustrated exemplary embodiments, when the nature or properties of data inputted to a system are not precisely known, it is possible to condition previously the system that most appropriate effects can be obtained even from such data by introducing the fractal dimension as the index. Besides, the effects or result achieved through the system can be evaluated in advance to thereby allow appropriate measures to be previously taken for the result. Further, change of the fractal dimension can be made use of for detection of abnormality.

**Claims**

1. An information processing system, comprising:
   means (103; 202; 1703; 1903, 2204) for determining a fractal dimension of input data (101; 201; 1701; 1902) inputted to said information processing system; and
   means (105; 203; 1705, 1706, 1707; 1904; 2205) for executing predetermined data processing on said input data by using said fractal dimension determined.

2. An information processing system according to claim 1, wherein said executing means (105; 203; 1705, 1706, 1707; 1904) executes selectively said predetermined data processing on said input data (101; 201; 1701; 1902) in dependence on a value of said fractal dimension determined.

3. An information processing system according to claim 1, wherein said executing means (105; 203; 1705, 1706, 1707) executes said predetermined data processing on the data selected from said input data (101; 201; 1701; 1902) in dependence on a value of said fractal dimension determined.

4. An information processing system according to claim 1, further comprising:
means (106; 204; 1704) for adjusting parameters used in said predetermined data processing on the basis of said fractal dimension determined.

5. An information processing system according to claim 2, further comprising:
means (106; 204; 1704) for adjusting parameters used in said predetermined data processing by making use of said fractal dimension determined.

6. An information processing system according to claim 3, further comprising:
means (106; 204; 1704) for adjusting parameters used in said predetermined data processing by making use of said fractal dimension determined.

7. An information processing system according to claim 1, further comprising:
means (109; 206) for modifying result of said predetermined data processing by making use of said fractal dimension determined; and
means for outputting a result of said modification.

8. An information processing system according to claim 2, further comprising:
means (109; 206) for modifying result of said predetermined data processing by making use of said fractal dimension determined; and
means for outputting a result of said modification.

9. An information processing system according to claim 3, further comprising:
means (109; 206) for modifying result of said predetermined data processing by making use of said fractal dimension determined; and
means for outputting a result of said modification.

10. An information processing system according to claim 4, further comprising:
means (109; 206) for modifying result of said predetermined data processing by making use of said fractal dimension determined; and
means for outputting a result of said modification.

11. A prediction system, comprising:
means (203) for performing prediction processing by using predetermined prediction logics on the basis of time-series input data (201) supplied to said prediction system;
means (205) for determining a fractal dimension of said time-series input data;
means (206) for determining confidence data of a result of said prediction processing on the basis of said fractal dimension determined; and
means for outputting said confidence data together with the corresponding result of said prediction processing.

12. A prediction system according to claim 11, wherein said prediction processing means includes a neural network (703, 704, 705; 803, 804, 805; 1002, 1003, 1004) and means (106; 204) for setting parameters required for learning by said neural network on the basis of said fractal dimension determined.

13. A prediction system, comprising:
input means for inputting time-series data;
means (1702) for performing a predetermined conversion on said time-series input data;
means (1703) for determining a fractal dimension of the data resulting from said conversion;
means (1705) for selecting the data resulting from said conversion in dependence on a value of said fractal dimension;
means (1706) for performing prediction processing on the basis of said selected data by using a predetermined prediction logic; and
means (1707) for performing conversion processing reverse to said predetermined conversion on the data resulting from said prediction processing.

14. An alarm generating system, comprising:
    means (1903) for determining a fractal dimension of monitoring data inputted to said alarm system, and
    means (1904) for generating an alarm signal on the basis of data selected from said monitoring data in correspondence to a value of said fractal dimension determined.

FIG. 1

FIG. 2

# FIG. 3

START

DETERMINE MAXIMUM INTERVAL NUMBER — 301

INCREMENT VALUE OF INTERVAL k FROM "1" TO "MAXK" ONE BY ONE — 302

DETERMINE SUM OF DISTANCES $\Delta(k)$ BETWEEN POINTS DISTANCED BY k IN X-DIRECTION — 303

CORRECT $\Delta(k)$ UPON DISCREPANCY WITH END POINT — 304

PLOT RELATION BETWEEN "$\log(k)$" AND "$\log(\Delta(k)/k)$" — 305

DETERMINE SLOPE "D" OF POINT-PLOTTED RECURRENCE LINE BY LEAST SQUARE METHOD — 306

END

# F I G . 4

X₂ ... $\delta_2^1$ ... $\delta_1^2$ ... $\delta_3^1$

X₁ ... $\delta_1^1$

X₀

$\delta_1^3$

Xₙ

X₃

0
(START
POINT)

1

2

3

········

N
(END
POINT)

t

# F I G . 6

$Y_j$  OUTPUT

$f(U_j)$

j

$U_j$

$W_{j1}$ $W_{j2}$ $W_{ji}$ $W_{jN}$

COUPLING COEFFICIENT
(WEIGHT OF SYNAPSE)

$X_1$     $X_2$   ·······   $X_i$   ······   $X_N$

OUTPUTS FROM OTHER NEURONS

14

# F I G . 5

# FIG. 7

CORRECT DATA
(TEACHER DATA)

701 — $K_1$ ..... $K_r$

702 OUTPUT DATA

$Y_1$ ..... $Y_r$

703 OUTPUT LAYER

704 INTERMEDIATE
(HIDDEN) LAYER

705 INPUT LAYER

INPUT DATA 706 — $Z_1$  $Z_2$ ..... $Z_s$

16

# FIG. 8

CORRECT DATA
802

CpNJNJN[] Xₙ₋₂ Xₙ₋₁ Xₙ

TIME-SERIES
DATA
801

OUTPUT LAYER
803

r = "3"

INTERMEDIATE
LAYER
804

S = "4"

INPUT
LAYER
805

n-6  n-4  n-2  n
n-5  n-3  n-1

806
FEEDBACK

Xₙ₋₄ Xₙ₋₃ Xₙ₋₂ Xₙ₋₁

807
INPUT DATA

# FIG. 9

```
START
```

| REPEAT LEARNING SEVERAL TIMES | LEARNING PATTERN No. P = O |
|---|---|
| | REPEAT LEARN-ING PATTERN SEVERAL TIMES |

```
END
```

REPEAT LEARN-ING PATTERN SEVERAL TIMES

ASSIGN INPUT PATTERN FOR CONCERNED POINT $X_{m-p}$ IN TIME-SERIES DATA

DETERMINE STATES OF NEURONS IN MULTIPLE LAYERS

HOLD STATE OF NEURONS IN OUTPUT LAYER AT +mp(P)

CORRECT INTER-LAYER COUPLING COEFFICIENTS BY BACK-PROPAGATION METHOD

DETERMINE SUCCEEDING INPUT PATTERN FOR CONCERNED POINT $X_{n,p}$

INCREMENT VALUE OF P

DECIDE CONVERGENCE

# FIG. 10

# FIG. 11

## F I G . 12

## F I G . 13

# FIG. 14

# FIG. 15

# FIG. 16

# FIG. 17

# F I G . 18

# F I G . 19

# FIG. 20

FRACTAL DIMENSION = 1.97

# FIG. 21

FRACTAL DIMENSION = 1.87

# F I G . 22

CONSTRUCTION SUCH
AS BUILDING,
BRIDGE, etc.

2201

2202 CRACKS

CRACK DATA INPUT
PROCESSING MODULE

2203

2204 — FRACTAL DIMENSION CALCULATING MODULE

2205 — DANGER-LEVEL DECISION MODULE → DANGER LEVEL DISPLAY — 2206